(19)

Europäisches
Patentamt
European
Patent Office
Office européen
des brevets

(11) **EP 2 682 422 A1**

(12) **EUROPEAN PATENT APPLICATION**

(43) Date of publication:
**08.01.2014 Bulletin 2014/02**

(21) Application number: **12174730.7**

(22) Date of filing: **03.07.2012**

(51) Int Cl.:
*C08K 7/14* (2006.01)          *C08J 3/22* (2006.01)
*C08J 5/04* (2006.01)          *B29B 9/14* (2006.01)
*B29B 7/48* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **DSM IP Assets B.V.**
**6411 TE Heerlen (NL)**

(72) Inventors:
• **Geesink, Johannes Hendrik**
**6100 AA Echt (NL)**

• **Sun, Chuxia**
**6100 AA Echt (NL)**

• **Van Dijk, Michael Alphonsus Cornelis Johannes**
**6100 AA Echt (NL)**

• **Boonen, Petrus Johannes Lambertus**
**6100 AA Echt (NL)**

• **Jansen, Johan Franz Gradus Antonius**
**6100 AA Echt (NL)**

(74) Representative: **Verhaegen, Ilse Maria M. et al**
**DSM Intellectual Property**
**Urmond Office**
**P.O. Box 4**
**6100 AA Echt (NL)**

(54) **Thermosetting resin compositions comprising homogeneously distributed long reinforcing fibers**

(57)    The present invention relates to a process for preparing a solid, reinforced, thermal radically curable thermosetting resin composition comprising (A) polyester resin with reactive carbon unsaturations, (B) fibers and (C) a radical initiator, wherein the process comprises mixing

(1) Adding the polyester resin (A), and optionally other compounds, into a kneading device having two opposed non-intermeshing screws,

(2) Liquefying at least the polyester resin in the kneading device to obtain a first composition containing liquefied polyester resin,

(3) Adding radical initiator (C) into the kneading device to the first composition containing liquefied polyester resin to obtain a second composition containing liquefied polyester resin and radical initiator,

(4) Adding and dispersing, to the second composition in the kneading device, fibers having an initial weight average length $L_w$ of from 2 to 50 mm to obtain the solid, reinforced, thermal radically curable thermosetting resin composition,

wherein

- the gap between the two opposed non-intermeshing screws is $\geq 1$ mm,

- the kneading device has a barrel temperature $T_p$ from 80 to 130 °C,

- the dispersing is effected at a pressure lower than 2 bar,

- the dispersing is effected at a shear rate in the range from 1 to 5000 sec$^{-1}$,

- the viscosity of the composition prior to adding the fibers is in the range from 3 to 3000 Pa.s (at $T_p$),

- the weight average length $L_w$ of the fibers present in the solid, reinforced, thermal radically curable thermosetting resin composition is higher than 1 mm.

EP 2 682 422 A1

**Description**

The invention relates to a process for preparing solid, reinforced, thermal radically curable thermosetting resin compositions comprising long reinforcing brittle fibers (A), polyester resin with reactive unsaturations (B) and radical initiator (C). It also relates to reinforced resin compositions obtained by this process, it further relates to finished products obtained from reinforced resin compositions according to the invention.

The so-called SMC (sheet moulding compound) process is one of the most important process technology for preparing ready to mould, solid, fiber reinforced thermal radically curable resin compositions. The SMC process is a multistage process. The ingredients, like the unsaturated polyester resin, reactive diluent, filler, radical initiator, thickener and others, are mixed into a low-viscous paste, which is then introduced into a SMC installation. The SMC installation is used to produce SMC semi-finished products. To this end, the paste is cast onto a plastic carrier film. As the process continues, fibers, in particular glass fibers, are cut onto the paste and are being distributed uniformly over the surface of the paste. Once these have drifted through the depth of the paste, another film is added on top which sandwiches the paste containing the fibers. The laminates are compacted and then enter onto a take-up roll, which is used to store the product whilst it matures. The maturing process lasts 2-7 days. Then, the semi-finished product is cut to a desired target weight and then pressed in a press with a shaping mold to form a component. During the pressing operation, the semi-finished product is heated, causing the component to cure, resulting in a finished product.

In order to obtain good mechanical properties, it is crucial that the fibers become well impregnated with the paste. Generally, in order to achieve good impregnation and also for the flowability of the paste, the viscosity of the paste may not be too high; and therefore diluents are present in the paste resulting in a low viscous paste. Typical diluents are low viscous, volatile organic compounds (VOC), such as liquid ethylenically unsaturated monomers which also act as crosslinking monomers in the curing process (therefore called reactive diluents). On the other hand, the maturing process (also called thickening) is essential for increasing the viscosity of the laminate to produce a doughlike semi-finished product which can be easily handled for moulding.

Advantageous to this SMC process is the presence of fibers with long length, due to little breakage of fibers since the fibers are not subjected to high shear, typically with a length longer than 5-15 mm, resulting in good mechanical properties of the composite material.

However, a drawback from the SMC process is the relatively high emission of volatile organic compounds (VOC), due to the relatively high amount of viscosity lowering diluents used as reactive diluent, typically volatile organic compounds such as styrene. VOC emissions from thermosetting (and other) resins are a common environmental concern. As production increases, increased quantities of VOCs are being emitted. There is, therefore, a need for improved suppression of VOC vapor emissions from thermosetting resins during the manufacturing and molding processes.

It is however well-known that reinforcing fibers which are characterized by high tensile strength (such as glass and carbon fibers), added to improve the modulus or strength of the molded articles, suffer from the disadvantage that they break to an undesirable small length during mixing for dispersing the fibers into high viscous thermosetting resins having no or low amounts of diluents, leading to a lower stress and elongation at break and low impact strength.

Another drawback of the SMC process is that the required maturing process results in a long processing time.

The object of the present invention is therefore to provide a process for preparing a solid, reinforced, thermal radically curable thermosetting resin composition comprising long reinforcing brittle fibers homogeneously distributed in the composition whereby the processing time can be reduced and also the VOC emissions can be reduced.

The object has surprisingly been achieved in that the process comprises

(1) Adding the polyester resin (A), and optionally other compounds, to a kneading device having two opposed non-intermeshing screws,
(2) Liquefying at least the polyester resin in the kneading device to obtain a first composition containing liquefied polyester resin,
(3) Adding radical initiator (C) into the kneading device to the first composition containing liquefied polyester resin to obtain a second composition containing liquefied polyester resin and radical initiator,
(4) Adding and dispersing, to the second composition in the kneading device, fibers having an initial weight average length $L_w$ of from 2 to 50 mm to obtain the solid, reinforced, thermal radically curable thermosetting resin composition, wherein

- the gap between the two opposed non-intermeshing screws is $\geq$ 1 mm,
- the kneading device has a barrel temperature $T_p$ from 80 to 130 °C,
- the dispersing is effected at a pressure lower than 2 bar,
- the dispersing is effected at a shear rate in the range from 1 to 5000 sec$^{-1}$,
- the viscosity of the composition prior to adding the fibers is in the range from 3 to 3000 Pa.s (at $T_p$),
- the weight average length $L_w$ of the fibers present in the solid, reinforced, thermal radically curable thermosetting resin composition is higher than 1 mm.

It has surprisingly been found that with the process according to the invention, solid, reinforced, thermal radically curable thermosetting resin compositions in which the polyester is the continuous phase and comprising homogeneously distributed, long reinforcing brittle fibers, can be prepared whereby the processing time can be reduced and also the VOC emissions can be reduced. An additional advantage of the process of the invention is that 90 wt.% or even more of the fibers, having a weight average length $L_w$ of at least 50% of the initial weight average length $L_w$, are present in the reinforced, thermal radically curable thermosetting resin composition as single fibers, i.e. on filament level.

As used herein, a solid composition means that the composition has, at room temperature, a Tg or $T_m$ of $\geq$ 20°C. The melting temperature $T_m$, the glass transition temperature Tg and the viscosity are determined as described in the experimental section of this application.

A thermal radically curable thermosetting resin composition is a resin composition that, by subjecting the composition to a heat treatment, cure (i.e. harden) by chemical reaction, and cannot be melted or readily re-formed once hardened. By subjecting the composition to a heat treatment, the various unsaturated components of the resin composition crosslink with each other via a free radical (co)polymerization mechanism to produce a hard, thermoset plastic mass (also referred to as structural part).

Preferably the kneading device having two opposed non-intermeshing screws is a co- or counter-rotating non-intermeshing extruder or a co- or counter-rotating non-intermeshing batch kneader. As used herein, the rotating blades of a batch kneader are referred to as screws. More preferably the kneading device has counter-rotating screws. More preferably the kneading device is a counter-rotating non-intermeshing twin-screw extruder. Characteristic for the kneading devices to be used in the invention is that there is a large gap in the kneading device between the non-intermeshing screws. A preferred gap size is $\geq$ 3 mm, more preferably $\geq$ 5 mm and even more preferably the gap size between the non-intermeshing screws is $\geq$ 6 mm wide. The gap size between the non-intermeshing screws is preferably $\leq$ 25 mm and more preferably $\leq$ 15 mm. The gap size between the non-intermeshing screws is preferably $\geq$ 3 mm and $\leq$ 15 mm. Moreover, the clearance between screws and barrel is preferably smaller than 0.2 mm such that little material will flow through this clearance.

The shear rate during dispersing is in the range from 1 to 5000 sec$^{-1}$, more preferably from 1 to 1000 sec$^{-1}$ and even more preferably the shear rate is in the range from 1 to 500 sec$^{-1}$.

The dispersing is effected at a pressure lower than 2 bar, preferably the dispersing is effected at atmospheric pressure.

The present invention also relates to a reinforced, thermal radically curable thermosetting resin composition comprising (A) polyester resin with reactive carbon unsaturations, (B) fibers and (C) a radical initiator, characterized in that

- the composition has a $T_g$ of $\geq$ 20°C, preferably $\geq$ 25°C, more preferably $\geq$ 30°C, even more preferably $\geq$ 35°C.
- the weight average length $L_w$ of the fibers present in the composition is higher than 1 mm,
- at least 90 wt.% of the fibers having the weight average length $L_w$ higher than 1 mm are present in the composition as single fiber,
- the polyester resin is the continuous phase of the composition. Preferably, the composition is an extrudate.

The polyester resin A is preferably an unsaturated polyester resin. Examples of unsaturated polyester resins can be found in a review article of M. Malik et al. in J.M.S. - Rev. Macromol. Chem. Phys., C40 (2&3), p.139-165 (2000). The authors describe a classification of such resins - on the basis of their structure - in five groups:

(1) Ortho-resins: these are based on phthalic anhydride, maleic anhydride, or fumaric acid and glycols, such as 1,2-propylene glycol, ethylene glycol, diethylene glycol, triethylene glycol, 1,3-propylene glycol, dipropylene glycol, tripropylene glycol, neopentyl glycol or hydrogenated bisphenol-A.
(2) Iso-resins: these are prepared from isophthalic acid, maleic anhydride or fumaric acid, and glycols.
(3) Bisphenol-A-fumarates: these are based on ethoxylated bisphenol-A and fumaric acid.
(4) Chlorendics: are resins prepared from chlorine/bromine containing anhydrides or phenols.

The unsaturated polyester resin is preferably an unsaturated polyester resin having a Tg or $T_m$ higher than room temperature. More preferably, the unsaturated polyester resin is preferably an unsaturated polyester resin having a $T_g$ or $T_m$ higher than room temperature and having an acid value $\geq$ 10, more preferably having an acid value $\geq$ 15. As used herein, the acid value of the unsaturated polyester resin is determined titrimetrically according to ISO 2114-2000.

The fiber length distribution may be represented in terms of number average fiber length $L_n$ and weight average fiber length $L_w$. In this application, $L_w$ is used for characterizing the fiber length in the composition. The weight average fiber length of the reinforcing fibers is defined as: $L_w = \dfrac{\sum n_i l_i^2}{\sum n_i l_i}$ where $n_i$ is the number of fibers of length $l_i$.

The fibers used in the present invention preferably have a tensile modulus of $\geq 40$ GPa. Preferably, the average (nominal) tensile modulus of the individual reinforcing fibers is $\geq 40$ GPa, more preferably $\geq 50$ GPa, even more preferably $\geq 60$ GPa and most preferably $\geq 70$ GPa determined according to ASTM D2343. For comparison, the tensile modulus of natural fibers such as wood fibers is generally $\leq 30$ GPa, see for example figure 4, page 4 in the article "Natural Fibers Plastic Composites for Automotive Applications" by P.A. dos Santos et al, SPEA 2008. The tensile modulus is the ratio of stress to elastic strain in tension and it is a measure of how much pulling force a certain diameter fiber can exert without breaking.

Examples of reinforcing fiber components having such tensile modulus include, without limitation, glass fibers, aramid fibers and carbon fibers. Typical values of tensile modulus for various commercial high strength reinforcing fibers are 72.4 GPa for E glass, 86.9 GPa for S glass, from 200 to 500 GPa for (PAN) carbon fibers, from 350 to 700 GPa for Pitch carbon fibers, and 131 GPa for Kevlar 49, as shown in table 2.1, page 18 of the handbook "Fiber-Reinforced Composites" from P.K. Mallik, Marcel Dekker INC. Preferably the reinforcement fibers are selected from the group consisting of glass fibers and carbon fibers. More preferably the reinforcement fibers are glass fibers..

Preferably, the initial weight average length $L_w$ of the fibers used in the process according to the invention is from 3 to 30 mm.

The weight average length $L_w$ of the fibers present in the solid, reinforced, thermal radically curable thermosetting resin composition obtained with the process according to the invention or present in the reinforced, thermal radically curable thermosetting resin composition is preferably higher than 1.5 mm, more preferably higher than 2 mm and even more preferably higher than 5 mm.

It is desirable to have as much filler as possible in the thermosetting resin composition, since filler is far less expensive than the resin system. Such fillers may be used to lower the cost of the molding compounds, to make the molding compounds opaque and/or to act as thixotropic agent. Examples of fillers include, without limitation, metal oxides, carbonates such as calcium carbonate, carbon black, alumina, clay, mica, silicates, (metal) sulphates and wood flour. Mixtures of all kind of such fillers may also be used.

Volatile organic compounds are defined herein as monomers or solvents having an initial boiling point less than or equal to 250 °C measured at a standard atmospheric pressure of 101.3 kPa. Such compounds may be reactive monomers or diluents, i.e. addition polymerizable monomers used for crosslinking, including monomers such as styrene, alphamethyl styrene, 2,4-dichloro styrene, paramethyl styrene, vinyl acetate, vinyl toluene, methyl methacrylate, ethyl acrylate, methyl vinyl ketone and butyl methacrylate. Styrene is generally preferred as reactive diluent because of its low cost and good dielectric and tensile properties on cure, and since it lowers the viscosity of the thermosetting resin component to be able to wet and disperse the reinforcing fiber more properly.

The solid, reinforced, thermal radically curable resin composition obtained with the process according to the invention and the reinforced, thermal radically curable resin composition according to the invention is preferably substantially free of volatile organic compounds. By substantially free of volatile organic compounds is meant herein less than or equal to 10 wt%, preferably less than 5 wt%, even more preferably less than 1 wt%, based on the total amount of the thermosetting resin composition. Most preferably the composition contains 0 wt% of volatile organic compounds based on the total amount of the thermosetting resin composition. Herein the total amount of VOCs (TVOC) is defined according to ISO 16000-6 as the sum of volatile organic compounds, sampled on Tenax TA, which elute from a non-polar or slightly polar gas chromatographic separation column between and including n-hexane and n-hexadecane (n-C6 - n-C16).

The process of the invention preferably further comprises, prior to step (3), adding a crosslink density enhancer (which is able to react with the polyester resin) to the first composition containing liquefied polyester resin. The crosslink density enhancer is preferably selected from the group consisting of acrylates, methacrylates, epoxies (bisphenol A diglycidyl ether), vinylesters, vinylethers, vinyl amides, alkyn ethers, alkyn esters, alkyn amides, amines, alkyn amines, propargyl ethers, propargyl esters, itaconates, enamines, and mixtures thereof.

Examples of non-volatile crosslink density enhancers as listed above are for instance are vinyl compounds, allyl compounds, glycidyl esters, betahydroxy alkyl amides, isocyanates, such as butanedioldimethacrytate (BDDMA), trimethylolpropane triacrylate (TMPTA), trimethylolpropane trimethacrylate (TMPTMA), Pentaerythritol tri- or tetra (meth) acrylate, triallylcyanurate (TAC), triallyl isocyanurate , triallyltriisocyanurate (TAIC), triallyltrimelitate (TATM), 1,1,1-trishydroxymethylpropane-trimethacrylate, 1, 3-diisopropenylbenzene, ethyleneglycoldimethacrylate and mixtures of any of them. Preferred non-volatile crosslink density enhancers are triallylcyanurate (TAC), triallyltriisocyanurate (TAIC), triallyltrimelitate (TATM), 1,1, 1- trishydroxymethylpropane-trimethacrylate and mixtures thereof.

The amount of polyester resin (A) present in the reinforced, thermal radically curable thermosetting resin composition according to the invention or obtained with the process according to the invention is preferably from 20 to 95 wt.%, relative to the total amount of polyester resin (A), fibers (B) having a weight average length $L_w$ higher than 1 mm and crosslink density enhancer. The amount of fibers (B) having a weight average length $L_w$ higher than 1 mm which are present in the reinforced, thermal radically curable thermosetting resin composition according to the invention or obtained with the process according to the invention is preferably from 5 to 50 wt.%, relative to the total amount of polyester resin (A), fibers (B) having a weight average length $L_w$ higher than 1 mm and crosslink density enhancer. In case crosslink density enhancer is used in the process according to the invention, the amount of crosslink density enhancer present in the reinforced, thermal radically curable thermosetting resin composition according to the invention or obtained with the process according to the invention is preferably from 0.1 to 50 wt.%, relative to the total amount of polyester resin (A), fibers (B) having a weight average length $L_w$ higher than 1 mm and crosslink density enhancer. In case fillers are used in the process according to the invention, the amount of fillers present in the reinforced, thermal radically curable thermosetting resin composition according to the invention or obtained with the process according to the invention is preferably from 20 to 60 wt.%, relative to the total amount of polyester resin (A), fibers (B) having a weight average length $L_w$ higher than 1 mm and crosslink density enhancer.

Examples of suitable radical initiators (C) are azo initiators or peroxides. The radical initiator is employed to generate free radicals and induce crosslinking of the unsaturated thermosetting resin composition during curing upon heating. Such initiator is also called a thermal initiator. Preferred thermal initiators are solid at room temperature.

Examples of suitable azo compounds include 2,2'-azobis (isobutyronitrile) and 2, 2'-azobis (2-methylbutyronitrile).

Preferably, the thermal initiator is a peroxide selected from the group consisting of peresters, perethers, monopercarbonates, hydroperoxides and any mixture thereof. More preferably, the thermal initiator is a peroxide selected from the group consisting of peresters, perethers, monopercarbonates and any mixture thereof. Examples of suitable peroxide initiators are cumylperoxyneodecanoate, 2,4, 4-trimethylpentyl-2 peroxyneodecanoate, tert-amyl peroxyneodecanoate, bis (4-tert-butylcyclohexyl) peroxydicarbonate, bis (2-ethylhexyl) peroxydicarbonate, tert-butyl peroxyneodecanoate, dibutyl peroxydicarbonate, diacetylperoxydicarbonate, dimyristyl peroxydicarbonate, tert- amyl peroxypivalate, tert-butyl peroxypivalate, bis (3,5, 5-trimethylhexanoyl) peroxide, dilauroyl peroxide, didecanoyl peroxide, 2,5-bis (2-ethylhexanoylperoxy)-2, 5- dimethylhexane, tert-amyl peroxy-2-ethylhexanoate, dibenzoyl peroxide, tert-butyl peroxy- 2-ethylhexanote, tert-butyl peroxydiethylacetate, 1,4-bis (tert- butylperoxycarbo) cyclohexane, tert-butyl peroxyisobutanoate, 1,1-bis (tert-butylperoxy)- 3,3, 5-trimethylcyclohexane, 1,1-bis (tert-butylperoxy) cyclohexane, tert-butyl peroxy-3,5, 5-trimethylhexanoate, 2,2-bis (tert-butylperoxy) butane, tert-butylperoxy isopropyl carbonate, tert-butylperoxy 2-ethylhexyl carbonate, tert-butyl peroxyacetate, tert-butyl peroxybenzoate, di-tert-amyl peroxide, dicumyl peroxide, bis (tert- butylperoxyisopropyl) benzene, 2,5-bis (tert-butylperoxy)-2,  5-dimethylhexane, tert-butyl cumyl peroxide, 2,5-bis (tert-butylperoxy)-2, 5-dimethyl-3-hexyne, di-tert-butyl peroxide, diisopropylbenzene monohydroperoxide, cumyl hydroperoxide, tert-butyl hydroperoxide.

Preferably, the amount of radical initiator is at most 5 wt.% and at least 0.001 wt.%. The amount of radical initiator is more preferably from 0.01 to 4 wt.%, even more preferably from 0.1 to 3 wt.% and even more preferably from 0.5 to 3 wt.%. The amount of radical initiator is given relative to the total amount of polyester resin (A), fibers (B) having a weight average length $L_w$ higher than 1 mm and crosslink density enhancer.

Depending on the decomposition temperature of the peroxide and the barrel temperature $T_p$, it may be advantageous to use a polymerization inhibitor or a mixture of polymerization inhibitors. These radical inhibitors are preferably chosen from the group of phenolic compounds, hydroquinones, catechols, benzoquinones and/or phenothiazines. The amount of radical inhibitor that can be added may vary within rather wide ranges. Suitable radical inhibitors are for example phenolics, hydroquinones, benzoquinones, catechols, phenothiazines and stable radicals such as for instance N-oxyl radicals.

The process according to the invention may further comprise (5) cooling the reinforced, thermal radically curable thermosetting resin composition to ambient temperature.

The invention further relates to a finished product comprising a cured reinforced thermosetting resin composition obtained by curing the composition as described above or by curing the composition obtained by the process as described above. Preferably, the finished product is shaped by molding.

The present invention further relates to the use of the finished product in for example automotive applications, building industry and in household articles.

The invention will be further described with the following non-limiting examples.

**EXPERIMENTAL SECTION**

Materials used

| Synolite 9193-N-0 | = unsaturated polyester resin with a Tg of 38.81 °C from DSM |
| --- | --- |
| Uracross® P 750 | = unsaturated polyester resin from DSM |
| TAIC | = Triallyl isocyanurate from Evonik |
| SR 399 | = Dipenta erythritol pentaacrylate from Sartomer |
| Perkadox BC | = Dicumyl peroxde from Akzo Nobel |
| CPIC ECS303J | = glass fibers; diameter 11 micrometer, fiber length of 4 mm and a tensile modulus of 72 GPa from CPIC (Chongqing Polycomp International Corporation, China) |
| CPIC ECS404 | = glass fibers; diameter 11 micronmeter, fiber length of 12 mm and a tensile modulus of 72 GPa from CPIC (Chongqing Polycomp International Corporation, China) |

## Determining $T_m$ and $T_g$

The melting temperature $T_m$ and the glass transition temperature Tg are determined according to ISO-11357-3.2, (2009) in an $N_2$ atmosphere with heating and cooling rate of 10°C/min.

The measurement is suitably carried out with a Mettler Toledo Star System differential scanning calorimetry (DSC) using a heating and cooling rate of 10°C/min in an $N_2$ atmosphere. For the measurements of the melting temperature a sample of about 5 mg pre-dried powdered polymer was used. The pre-drying was carried out at high vacuum, i.e less than 50 mbar and a 105°C during 16 hrs. The sample was heated from 0°C to a temperature about 30°C above the melting temperature at 10°C/min, immediately cooled to 0°C at 10°C/min and subsequently heated to about 30°C above the melting temperature again at 10°C/min. For the melting temperature $T_m$ the peak value of the melting peak in the second heating cycle was determined.

## Determining viscosity

The viscosity of used resins was determined on a rheometer Physica MCR501 from Anton Paar using a 25 mm parallel plate-plate geometry. A strain of 0.01 % and frequency of 1Hz (6.28rad/s) were applied to characterize the curing behavior of each material between 80 and 200°C. The temperature is increased under a controlled heating rate of 5°C/min.

## Determining the weight average fiber length $L_w$

The weight average length of the fibers was determined using optical spectroscopy using an Epson scanner with a resolution of 400 dpi and scanning area of 12 cm x 12 cm, using Intertek method 3601 a.

The matrix polymer was burned off using a muffle furnace. The recovered glass fibers are dispersed on the slide plate and then the length of at least 100 fibers is measured.

## Example 1: Process for making fiber reinforced thermosetting resin compositions suitable for moulding

220.2 g Synolite 9193-N-0 was added in the form of flakes to a Haake Rheomix OS600 300cc batch mixer which is a non-intermeshing counter-rotating batch mixer in which the screws have a gear ratio 2:3, the gap between the screws is 4 mm and the turn speed of the screws is 30 rpm indicating a shear rate of 24 sec$^{-1}$, with a barrel temperature of 95°C whilst maintaining an atmospheric pressure (open to the atmosphere). After around 3 min, the resin was liquefied and 15 g triallylisocyanurate was added. After mixing for 30 seconds (a viscosity of 1000 Pa.s was reached), 4.8 g Perkadox BC-FF was added, followed by another 30 sec of mixing. Next 60g glass (CPIC ECS303J, diameter 11 micrometer, fiber length of 4 mm and a tensile modulus of 72 GPa) was added during 60 seconds and the glass fibers were dispersed into the mixture during another 60 seconds after which the mixture was removed from the kneader, pressed gently into a plate and allowed to cool down, resulting in an uncured solid resin composition with a Tg of around 28.7 °C in which the glass fibers were homogenously dispersed and possessed a weight average fiber length $L_w$ of 2.1 mm.

## Comparative experiment A

Example 1 was repeated except with different screws resulting in a gap between the screws of 0.1 mm resulting in a composition of which the weight average fiber length ($L_w$) is 0.3 mm and therefore being unsuitable for fiber reinforcement since it results in inferior mechanical properties, like for instance mechanical strength and impact, resulting in that the resulting resin composition cannot be applied for many applications, like for example SMC application.

Comparative experiment B

Example 1 was repeated except with a barrel temperature of 160°C resulting in that the composition was cured during the mixing process and therefore is unsuitable for further processing such as moulding.

Comparative experiment C

Example 1 was repeated except that the mixer was completely closed resulting in an internal pressure of around 6 bar, resulting in a composition with a weight average fiber length $L_w$ of 0.3 mm.

Comparative experiment D

Example 1 was repeated except that the barrel temperature was set to 75°C. As a consequence of this, the viscosity of the composition was 5000 Pa.s, which resulted in a composition with a weight average fiber length $L_w$ of 0.3 mm.

Comparative experiment E

Example 1 was repeated except that a shear rate of 10000 sec$^{-1}$ was applied, resulting in a composition with a weight average fiber length $L_w$ of 0.3 mm.

Comparative experiment F

Example 1 was repeated except that a shear rate of 0.1 sec$^{-1}$ was applied resulting in a composition in which the fibers were not homogenously distributed and resulted consequently in insufficient reinforcement.
The example clearly demonstrates that when using the process according to the invention, it is possible to prepare a solid, radically curable glass fiber reinforced composite composition; no reactive diluent, which may result in VOC emissions, is needed and the length of the fibers remain sufficient for obtaining reinforcement.
The example combined with the comparative experiments clearly demonstrates that for the preparation of a radically curable glass fiber reinforced composite composition the gap between the screws should be ≥ 4 mm. Furthermore the example combined with the comparative experiments shows that, in order to obtain long glass fiber reinforced, thermal radically curable thermosetting polyester compositions with high viscosity and low or even zero VOC emission, critical parameters are the pressure, the processing temperature, the shear rate and the viscosity during the mixing.

Examples 2-9

Example 1 was repeated using compositions as described in the following table (amounts are given in wt.%).
In case fillers like CaCO3 were added, they were added prior to the addition of the peroxide.

| Example | 2 | 3 | 4 | 5 | 6 | 7 | 8 | 9 |
|---|---|---|---|---|---|---|---|---|
| **Resin** | | | | | | | | |
| Synolite 9193-N-0 | 78.5 | 74.8 | 74.8 | 32.5 | 74.8 | | | |
| Uracross P 750 | | | | | | 78.5 | 74.8 | 74.8 |
| | | | | | | | | |
| **X-link enhancer** | | | | | | | | |
| TAIC | | | 3.7 | 1.6 | 3.7 | | | 3.7 |
| SR399 | | 3.7 | | | | | 3.7 | |
| | | | | | | | | |
| **Radical initiator** | | | | | | | | |
| Perkadox BC-FF | 1.5 | 1.5 | 1.5 | 0.65 | 1.5 | 1.5 | 1.5 | 1.5 |

(continued)

| Radical initiator | | | | | | | | |
|---|---|---|---|---|---|---|---|---|
| | | | | | | | | |
| **Fillers** | | | | | | | | |
| CaCO3 | | | | 43.5 | | | | |
| | | | | | | | | |
| **Glass fiber** | | | | | | | | |
| CPIC ECS303J (4mm) | 20 | 20 | 20 | 21.7 | | 20 | 20 | 20 |
| CPIC ECS404 (12mm) | | | | | 20 | | | |
| Weight average fiber length $L_w$ after mixing | 1.7 | 1.9 | 1.9 | 2.0 | 6.1 | 1.7 | 2.1 | 2.1 |

These experiments clearly demonstrate that various resins in various amounts and that fillers can be used in order to obtain radically curable compositions according to the invention.

Furthermore example 6 clearly shows that also longer glass fibers can be obtained after mixing.

Moulding of the compositions

The plates obtained in example 3-6, 8 and 9 were placed in a hot cure press and cured first at 150 °C for around 10 minutes, then post cured at 160°C for 15 minutes under a pressure of 98 bar after which cured fiber reinforced composite materials were obtained.

Material properties of cured reinforced composite materials

| Example | 3 | 4 | 5 | 6 | 8 | 9 |
|---|---|---|---|---|---|---|
| Modulus at 23°C (GPa) | 2.3 | 2.6 | 6.9 | 2.8 | 2.7 | 2.4 |
| Tg(°C) | 83 | 79 | 78 | 78 | 94 | 104 |
| Modulus at 200C (MPa) | 274 | 278 | 734 | 292 | 272 | 328 |
| Notched Izod (KJ/m$^2$) | 19.8 | 13.2 | 12.5 | 36.8 | 15.2 | 26.2 |
| Tensile E modulus (GPa) | 6.9 | 5.9 | 14.3 | 7.2 | 5.5 | 6.4 |
| Max strain at Break (MPa) | 96.8 | 82.3 | 138.5 | 120.4 | 75 | 144.8 |
| Elongation at Break (%) | 1.4 | 1.4 | 1.2 | 1.8 | 1.3 | 2.2 |

The results presented in this table clearly demonstrate that the cured glass fiber composites have good material properties. The mechanical properties as depicted in the table above already illustrate that they are suitable for use in structural applications like for instance SMC and BMC applications.

Comparing example 4 with example 6, in which longer glass fibers are used, nicely demonstrates the beneficial effect of using these longer fibers on the mechanical properties.

For further comparison, when performing example 4 with the mixer closed i.e. an internal pressure of 6 bar (resulting in a weight average fiber length 0.3 mm), the mechanical properties of the cured composite material were much lower. For instance a Tensile E modulus of only 3.5 GPa and a Notched Izod of only 9 kJ/ m$^2$ were obtained, which is too low for SMC application.

**Claims**

1. A process for preparing a solid, reinforced, thermal radically curable thermosetting resin composition comprising (A) polyester resin with reactive carbon unsaturations, (B) fibers and (C) a radical initiator, **characterized in that** the process comprises mixing

(1) Adding the polyester resin (A), and optionally other compounds, into a kneading device having two opposed non-intermeshing screws,
(2) Liquefying at least the polyester resin in the kneading device to obtain a first composition containing liquefied polyester resin,
(3) Adding radical initiator (C) into the kneading device to the first composition containing liquefied polyester resin to obtain a second composition containing liquefied polyester resin and radical initiator,
(4) Adding and dispersing, to the second composition in the kneading device, fibers having an initial weight average length $L_w$ of from 2 to 50 mm to obtain the solid, reinforced, thermal radically curable thermosetting resin composition,
wherein

- the gap between the two opposed non-intermeshing screws is $\geq$ 1 mm,
- the kneading device has a barrel temperature $T_p$ from 80 to 130 °C,
- the dispersing is effected at a pressure lower than 2 bar,
- the dispersing is effected at a shear rate in the range from 1 to 5000 sec$^{-1}$,
- the viscosity of the composition prior to adding the fibers is in the range from 3 to 3000 Pa.s (at $T_p$),
- the weight average length $L_w$ of the fibers present in the solid, reinforced, thermal radically curable thermosetting resin composition is higher than 1 mm.

2. Process according to claim 1, **characterized in that** the shear rate is in the range from 1 to 1000 sec$^{-1}$.

3. Process according to claim 1 or 2, **characterized in that** the kneading device having two opposed non-intermeshing screws is a counter-rotating non-intermeshing twin-screw extruder.

4. Process according to anyone of the above claims, **characterized in that** the gap between the two opposed non-intermeshing screws is $\geq$ 3 mm, preferably $\geq$ 5 mm.

5. Process according to anyone of the above claims, **characterized in that** the polyester resin A is an unsaturated polyester resin having a $T_g$ or $T_m$ higher than room temperature.

6. Process according to anyone of the above claims, **characterized in that** the fibers are glass fibers.

7. Process according to anyone of the above claims, **characterized in that** the initial weight average length $L_w$ of the fibers is from 3 to 30 mm.

8. Process according to anyone of the above claims, **characterized in that** the weight average length $L_w$ of the fibers present in the solid, reinforced, thermal radically curable thermosetting resin composition is higher than 1.5 mm.

9. Process according to anyone of the above claims, **characterized in that** the composition contains $\leq$ 10 wt% of volatile organic compounds.

10. Process according to anyone of the above claims, **characterized in that** the composition is free of volatile organic compounds.

11. Process according to anyone of the above claims, **characterized in that** the process further comprises, prior to step (3), adding a crosslink density enhancer to the first composition containing liquefied polyester resin, in an amount of from 0.1 to 50 wt% based on the total amount of polyester resin (A), fibers with weight average length $L_w$ higher than 1 mm (B) and crosslink density enhancer.

12. Process according to anyone of the above claims, **characterized in that** the radical initiator is a thermal initiator selected from the group consisting of peresters, perethers, monopercarbonates, and any mixture thereof.

13. Reinforced, thermal radically curable thermosetting resin composition comprising (A) polyester resin with reactive carbon unsaturations, (B) fibers and (C) a radical initiator, **characterized in that**

- the composition has a Tg of $\geq$ 20°C,
- the weight average length $L_w$ of the fibers present in the composition is higher than 1 mm,
- at least 90 wt.% of the fibers having the weight average length $L_w$ higher than 1 mm are present in the composition as single fiber,
- the polyester resin is the continuous phase of the composition.

14. Composition according to claim 13, **characterized in that** the composition has a $T_g$ of $\geq$ 25°C, preferably $\geq$ 30°C and more preferably $\geq$ 35°C.

15. Composition according to claim 13 or 14, **characterized in that** the composition is an extrudate.

16. Composition according to any one of the preceding claims, **characterized in that** the polyester resin A is an unsaturated polyester resin having a $T_g$ or $T_m$ higher than room temperature.

17. Composition according to any one of the preceding claims, **characterized in that** the fibers are glass fibers.

18. Composition according to any one of the preceding claims, **characterized in that** weight average length $L_w$ of the fibers present in the solid, reinforced, thermal radically curable thermosetting resin composition is higher than 1.5 mm.

19. Composition according to any one of the preceding claims, **characterized in that** the composition contains $\leq$ 10 wt% of volatile organic compounds.

20. Composition according to any one of the preceding claims, **characterized in that** the composition is free of volatile organic compounds.

21. Composition according to any one of the preceding claims, **characterized in that** the composition comprises from 0.1 to 50 wt% of a crosslink density enhancer, based on the total amount of polyester resin (A), fibers with weight average length $L_w$ higher than 1 mm (B) and crosslink density enhancer.

22. Composition according to any one of the preceding claims, **characterized in that** the radical initiator is a thermal initiator selected from the group consisting of peresters, perethers, monopercarbonates, and any mixture thereof.

23. A finished product comprising a cured reinforced thermosetting resin composition obtained by curing the composition according to anyone of claims 13-22 or obtained by the process according to anyone of claims 1-12.

**Europäisches Patentamt**
**European Patent Office**
**Office européen des brevets**

## EUROPEAN SEARCH REPORT

Application Number

EP 12 17 4730

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/042468 A1 (CHOI CHI HOON [KR] ET AL) 11 April 2002 (2002-04-11) | 13-23 | INV.<br>C08K7/14 |
| A | * claims 1, 3 *<br>* examples 5-8 * | 1-12 | C08J3/22<br>C08J5/04<br>B29B9/14 |
| | ----- | | B29B7/48 |
| X | DE 22 52 566 A1 (ASAHI CHEMICAL IND) 10 May 1973 (1973-05-10) | 13-23 | |
| A | * claim 6 * | 1-12 | |
| | ----- | | |

TECHNICAL FIELDS SEARCHED (IPC)

C08K
C08J
B29B

The present search report has been drawn up for all claims

| Place of search | Date of completion of the search | Examiner |
|---|---|---|
| The Hague | 16 November 2012 | Scheunemann, Sven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 17 4730

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2012

| Patent document cited in search report | | Publication date | Patent family member(s) | | Publication date |
|---|---|---|---|---|---|
| US 2002042468 | A1 | 11-04-2002 | JP | 3303193 B2 | 15-07-2002 |
| | | | JP | 2002060608 A | 26-02-2002 |
| | | | KR | 20020014891 A | 27-02-2002 |
| | | | US | 2002042468 A1 | 11-04-2002 |
| DE 2252566 | A1 | 10-05-1973 | DE | 2252566 A1 | 10-05-1973 |
| | | | GB | 1385760 A | 26-02-1975 |
| | | | JP | 951588 C | 25-05-1979 |
| | | | JP | 48072292 A | 29-09-1973 |
| | | | JP | 52042838 B | 26-10-1977 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. MALIK et al.** *J.M.S. - Rev. Macromol. Chem. Phys.,* 2000, vol. C40 (2, 3), 139-165